# EUROPEAN PATENT APPLICATION

(11) **EP 1 091 522 A2**
(43) Date of publication of application: **11.04.2001**
(21) Application number: 00109598.3
(22) Date of filing: 05.05.2000
(51) Int. Cl.: H04L 12/24

(54) **Copying configuration settings between electronic devices**

(30) Priority: 06.10.1999 US 414080
(71) Applicant: Hewlett-Packard Company, A Delaware Corporation, Palo Alto, CA 94304 (US)
(72) Inventor: Gase, Stephen T., Boise, Idaho 83709 (US); Clough, James, Meridian, Idaho 83642 (US); Wiegley, Douglas J., Eagle, Idahoe 83616 (US); Stollfus, Brennen W., Boise, Idaho 83703 (US)
(74) Representative: Schoppe, Fritz, Dipl.-Ing.

(57) **Abstract**

A method for automatically configuring a group of devices by acquiring configuration settings from one device and applying some or all of those settings to another device or group of devices. The user selects a previously configured "source" device (16) and electronically acquires and, preferably, stores some or all of the configuration settings from the source device (16). These configuration settings are then automatically applied to another device or group of devices, also called the "destination" device (18 and 20).

## Description

### FIELD OF THE INVENTION

This invention generally relates to remote configuration of electronic devices. More particularly, this invention relates to acquiring the configuration settings of one device and applying those settings to one or more other devices.

### BACKGROUND OF THE INVENTION

Electronic devices typically have several features or parameters which must be configured from time to time. These parameters and features may include assigning IP addresses (internet protocol addresses); subnet masks; IP gateway addresses; proxy server assignments; community names; device passwords; location descriptions; system contact; frame type selections; protocol stack selections; and device specific behavior settings such as print resolution or paper location. In most instances, devices are configured on an individual basis. A systems administrator or other user identifies a device to be configured and obtains the device's current configuration settings. The administrator then manually enters each of the new settings and transmits the information back to the device, repeating this process for each individual device to be configured. For configuring a group of devices, the same configuration steps must be repeated for each device in the group.

Simultaneous configuration of similar devices is possible today in software products like Hewlett-Packard Company's Web JetAdmin™. The administrator is typically presented with the superset of all configuration parameters for all devices. The administrator enters the proper setting for each parameter and the software tries to apply those settings to all of the devices. Some of the parameters or settings, however, may not apply to all of the devices. The software generates warnings in a log for parameters and settings that are not supported on individual devices. For those parameters and settings identified in the log, the administrator must manually enter the proper settings for each device.

This "batch" configuration mechanism used in conventional products has a number of drawbacks. It does not account for the differences between devices. All devices get the same set of batch configuration settings, often complicating the process because, as noted above, some of the batch configuration settings are not compatible with all of the devices to be configured. Also, the batch configuration settings are not dynamically extensible. That is, a new device may be introduced to a network and, because compatible configuration settings for that device are not contained within the superset of configuration parameters and settings, the new network device cannot be automatically configured - the user must manually enter the configuration settings. Additionally, conventional configuration systems do not allow an administrator or other user to automatically copy or acquire the configuration settings of a functioning device and apply those settings to another device.

### SUMMARY OF THE INVENTION

Accordingly, to simplify the work required to install a network device, the invention is directed to a method for automatically configuring a group of devices by acquiring configuration settings from one device and applying some or all of those settings to another device or group of devices. The user selects a previously configured device (the "source" device) and electronically acquires and, preferably, stores some or all of the configuration settings from the source device. These configuration settings are then automatically applied to another device or group of devices (the "destination" device).

The invention can take many forms. For instance, the user may select multiple destination devices to configure at once. In one embodiment, the implementing software recognizes familiar commands such as "copy" and "paste" to allow the user to select a source device and "copy" its configuration settings to a local storage area on the host device, such as an electronic clipboard or, if a web browser is utilized, to a list of cookies stored in the web browser's local files. Upon selection of the destination device, the user can issue a "paste" command causing the stored configuration settings to be applied to the destination device.

In another embodiment, the user may desire to "paste" the configuration settings to a dissimilar device. In this embodiment, a specification file of configurable features is created for each network device or type of network device that may be encountered. Upon receiving the paste command, the specification file of the source device is compared to the specification file of the destination device and a list of compatible features is created. Then, only the configuration settings of the compatible features are applied to the destination device.

Advantageously, the user need not manually determine the specific configuration settings needed. Instead, the invention automates the process of configuring network devices by comparing the source and destination devices to determine compatibility, acquires the configuration settings of the source device, and applies only those configuration settings compatible with the destination device. The user need only select a source device, issue a simple "copy" instruction, select a destination device, and issue a "paste" command, and the configuration settings are applied to each destination device without user intervention.

### DESCRIPTION OF THE DRAWINGS

Fig. 1 is a schematic representation of a computer network that includes a server, a client computer and several peripheral devices illustrating one system with which the invention may be implemented.
Fig. 2 is a block diagram of the network of Fig. 1 in which the invented device configuration process is embodied in software running on the network server.
Fig. 3 is a flow diagram of one embodiment of the invented device configuration process.
Fig. 4 is a block diagram of the network of Fig. 1 in which the invented device configuration process is embodied in software running on the network server and a web browser incorporated into the user interface.
Fig. 5 is a block diagram of the network of Fig. 2 in which a database is used to store specification files on the network server.
Figs. 6A and 6B are a flow diagram of a second embodiment of the invented device configuration process.
Fig. 7 is a flow diagram of a second embodiment of the invented device configuration process in which new devices are automatically detected and configured when they are installed on the network.

### DETAILED DESCRIPTION OF THE INVENTION

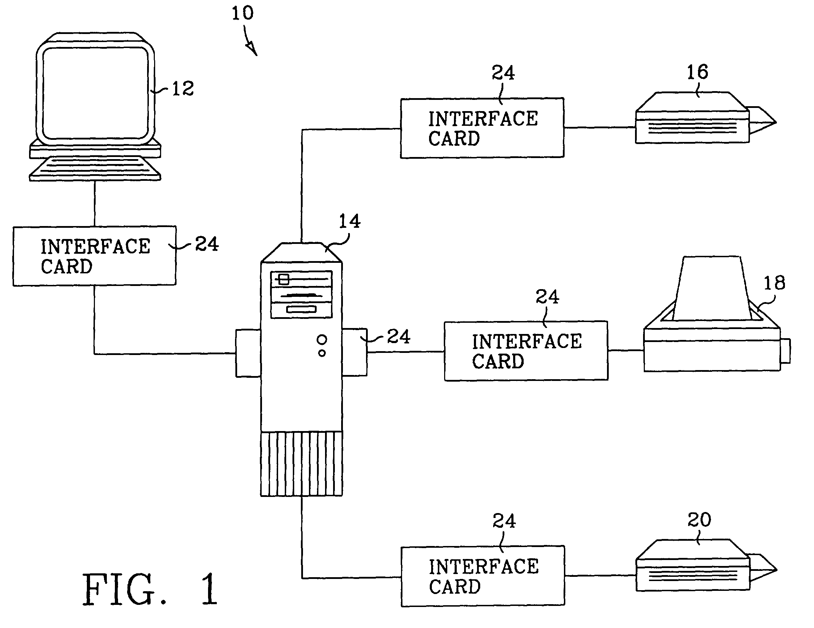

Although the various embodiments of the invention disclosed herein will be described with reference to the computer network 10 shown in Fig. 1, the invention is not limited to use with network 10. The invention may be implemented in or used with any computer system in which it is necessary or desirable to configure multiple electronic devices. Referring to Fig. 1, network 10 represents generally any local or wide area network in which a variety of different electronic devices are linked. Network 10 includes a user interface 12, typically a personal computer workstation, a network or web server 14, and other network devices 16, 18 and 20 joined by a communication link 22. Devices 16, 18 and 20 may include, for example, printers, scanners, fax machines, and other servers or computer workstations. Communication link 22 may be a direct connection using a parallel or serial cable, a wireless or remote connection via a telecommunication link, an infrared link or a radio frequency link, or any other connector or system that provides electronic communication between the network devices. Each network device 12-20 typically includes a network interface card 24 that facilitates communication among the various devices.

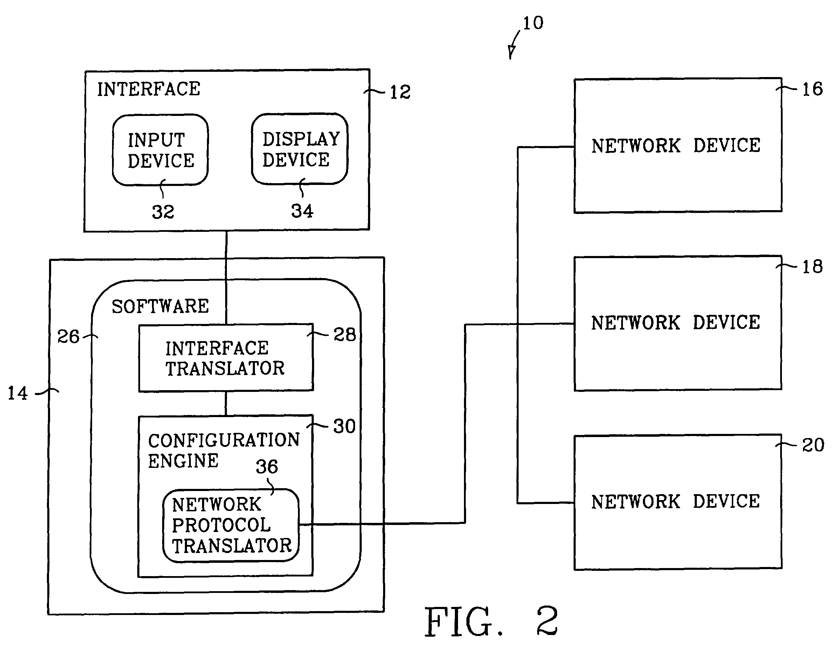

In one embodiment of the invention, shown in Fig. 2, the invented device configuration process is embodied in software 26 running on server 14. Referring to Fig. 2, software 26 includes an interface translator 28 and configuration engine 30. User interface 12 provides a mechanism for the user to send information to and receive information from software 26 on server 14. User interface 12, therefore, generally includes a keyboard or other suitable input device 32 and a computer monitor or other suitable display device 34. Information sent from and received by user interface 12 is translated by interface translator 28 which processes data entered by the user into a form usable by configuration engine 30. Interface translator 28 also translates information from the configuration engine 30 into a form the user can interpret. Configuration engine 30 is responsible for generating, monitoring, and receiving network communications specific to the configuration of network devices 16, 18 and 20. Configuration engine 30 will generally include a network protocol translator 36 such as a SNMP (Simple Network Management Protocol) translator or similar mechanism allowing bi-directional communication with other network devices via network 10.

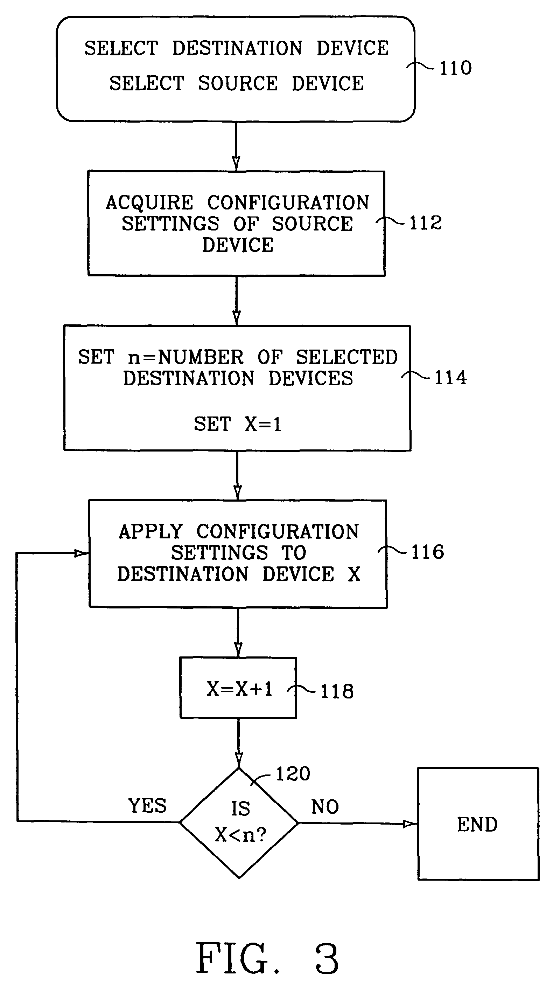

Referring to the flow diagram of Fig. 3, the user selects one or more network devices 18 and 20 to be configured (the destination devices) and a pre-configured network device 16 (the source device) (step 110). Interface translator 28 communicates the selection of source device 16 and destination devices 18 and 20 to configuration engine 30. Configuration engine 30 locates and communicates with source device 16 to acquire its configuration settings (step 112). Configuration engine 30 then automatically applies the configuration settings from source device 16 to each destination device 18 and 20 (steps 114-120). The user may prompt the application of one or more settings of the source device to each destination device or the settings may be applied automatically to all selected destination devices without user intervention as soon as the settings are acquired from the source device.

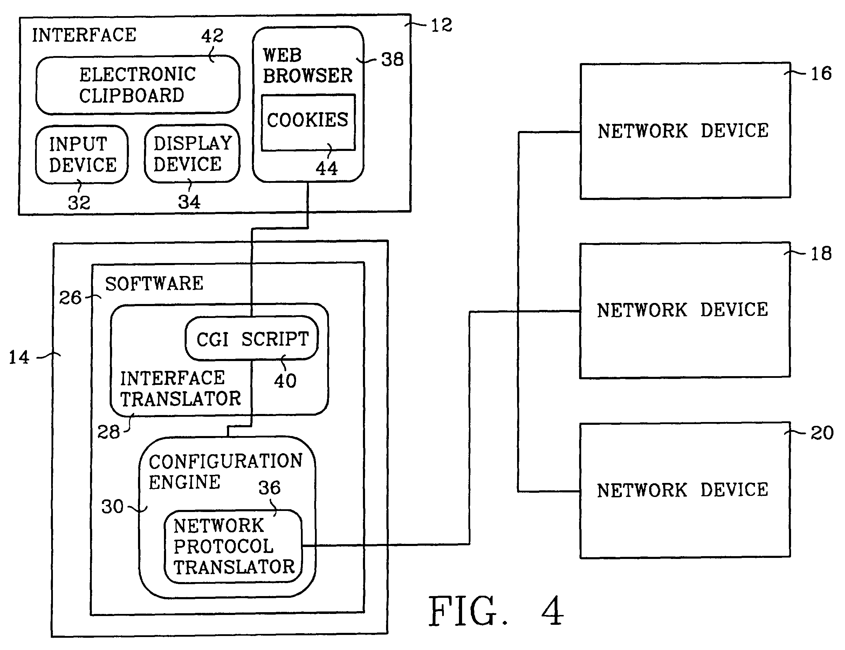

In one preferred version of this embodiment, shown in Fig. 4, interface 12 includes a web browser 38 which displays a graphic user interface implementing HTML (HyperText Markup Language). If a web browser is used, interface translator 28 should implement CGI (Computer Graphics Interface) compliant code 40. User interface 12 and interface translator 28 may, however, implement other types of network interface applications. Web browser 36 displays selectable icons representing each network device 16, 18 and 20 and each devices configuration features and setting. The configuration of the source device 16 may be applied to the destination devices 18 and 20 using the "copy" and "paste" features of web browser 38. The user selects an icon representing source device 16 and issues a "copy" command. In response to the copy command, web browser 38 directs configuration engine 30 to locate and communicate with source device 16 and acquire its configuration settings. When web browser 38 acquires configuration settings for source device 16, it may store those settings temporarily in an electronic clipboard 42 or more permanently in a list of cookies 44 in the local files of web browser 38. The user selects icons representing destination devices 18 and 20 and issues a "paste" command. In response to the paste command, web browser 38 directs configuration engine 30 to locate and communicate with each destination device 18 and 20 to apply the acquired configuration settings to each selected destination device.

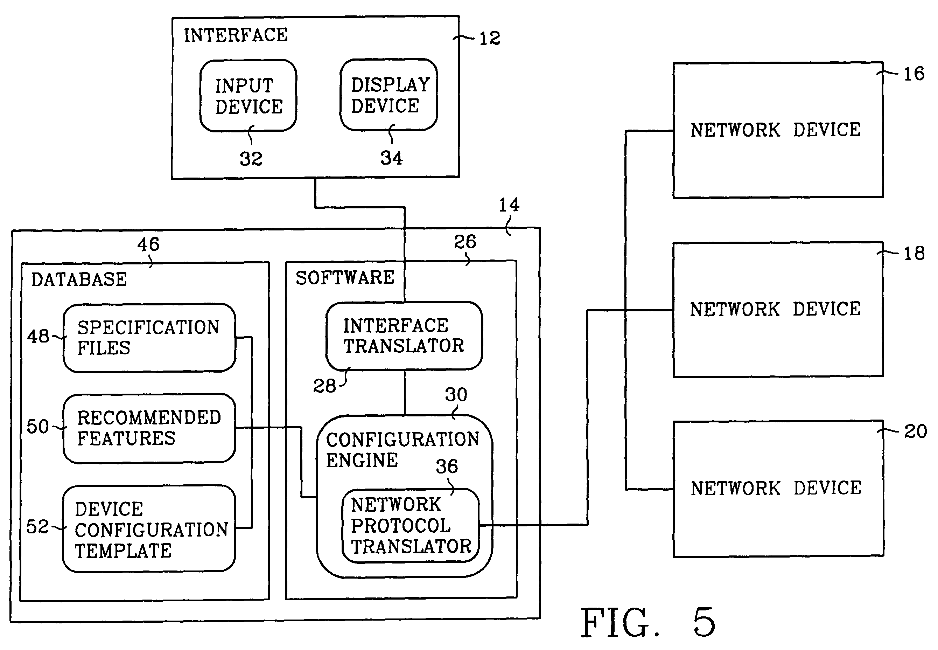

Another version of the software 26 embodiment is illustrated in Fig. 5. Referring to Fig. 5, software 26 communicates with database 46. Database 46 contains a specification file 48 for each device 16, 18 and 20 and, preferably, for any other device that might be encountered by the user even if the device is not presently installed on the network. Specification files 48 provide a mechanism for configuration engine 30 to compare the configuration features and setting of any source device with any destination device and configure only the features of the selected destination device that are compatible with the source device. Specification files 48 each describe a set of features that can be copied to and from the device represented by that specification file. Each specification file may also include an ordered description of each feature, and each feature description may contain the following information:
- The feature's name.
- An intuitive description of the feature.
- A comparison string that catalogs the types of the MIB
   (Management Information Base) objects used to implement the feature and their encodings.
- An ordered OID (Object Identifier) list which is used to apply the feature's configuration.

In the embodiment illustrated in Fig. 5, configuration engine 30 communicates with database 46 and loads the specification file 48 for each selected source and destination device (source device 16 and destination devices 18 and 20 in the Figures). Prior to applying the configuration settings to destination devices 18 and 20, configuration engine 30 compares the specification file 48 of source device 16 with the specification file 48 of each destination device 18 and 20. Based on this comparison, configuration engine 30 creates a list of features of source device 16 that are compatible with each destination device 18 and 20. Configuration engine 30 then applies the configuration settings to destination devices 18 and 20 for the compatible features. This embodiment may also operate in a reverse fashion. For instance, the user may be confronted with configuring a destination device. The user may not know of a compatible source device. Here, the user first selects a destination device. Configuration engine 30 then identifies the other devices available on network 10 and compares the specification file for the destination device with the specification files of other available devices to determine the device most compatible with the destination device. Configuration engine 30 designates this device as the source device and proceeds to configure the selected destination device using the configuration settings of the source device in the fashion noted above. These steps may triggered automatically without user intervention any time a new device is detected on network 10.

Referring again to Fig. 5, database 46 may also include a list of recommended features 50 and/or device configuration templates 52. Prior to applying the configuration settings for compatible features, configuration engine 30 communicates with database 46 and automatically applies only the configuration settings of the compatible features that appear on the list of recommended features 50. Configuration engine 30 may also transmit a list of compatible features which do not appear on the list of recommended features 50 to the interface translator 28. Interface translator 28, in turn, allows the user to choose to have the configuration settings of those non-recommended features applied to the corresponding destination device. After configuration engine 30 applies the configuration settings of the compatible features, configuration engine 30 may also generate a list of the features of each destination device that were not configured. Configuration engine 30 provides this list and an URL (Uniform Resource Locator), or a similar reference, for each listed device to interface translator 28 allowing the user to review the results and access the corresponding network device to configure the non-compatible features.

Each device configuration template 52 is an electronic representation of the configuration settings of any network device, even if that device is not installed on the network. In this embodiment, configuration engine 30 can acquire the configuration settings of a selected source network device from database 46 regardless of whether the source device is presently available on network.

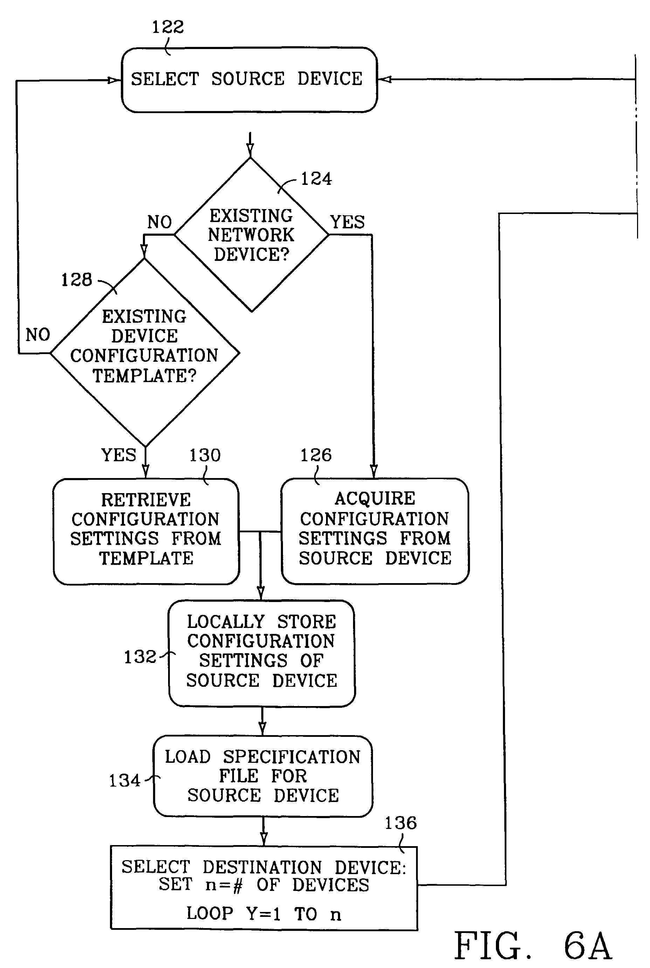

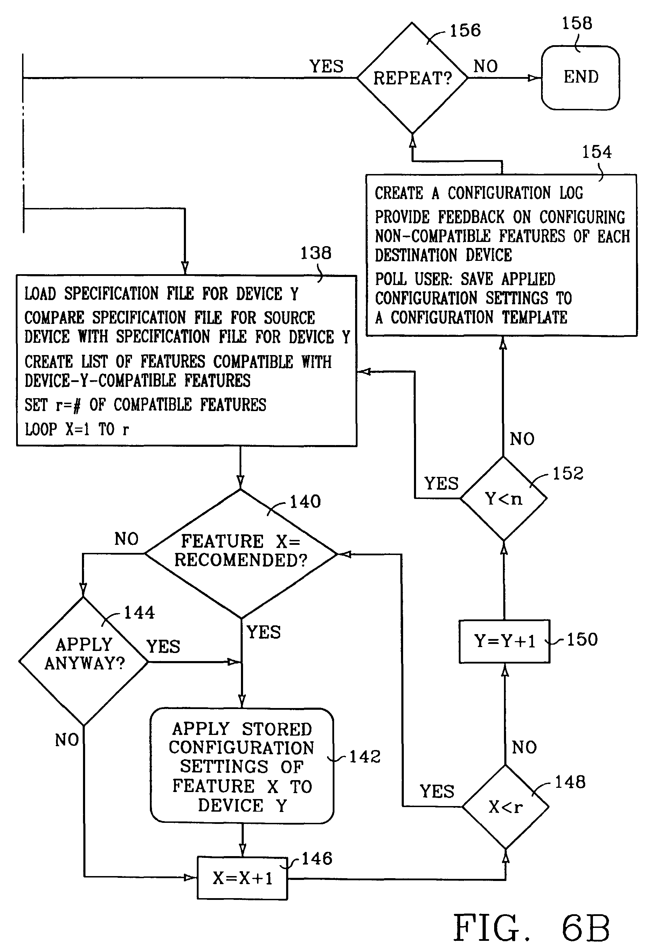

One embodiment of the invented method for device configuration will now be described with reference to the flow diagram of Figs. 6A and 6B. Beginning with Fig. 6A, the user selects a source device (step 122) and the software configuration engine 30 then determines whether the selected source device is available on the network (step 124). If the source device is available on the network, configuration engine 30 communicates with the source device to acquire its configuration settings (step 126). If the source device is not available on the network or as an alternative to obtaining settings from the source device, the configuration engine 30 determines if a device configuration template exists for the selected source network device (step 128). If a template exists, configuration engine 30 acquires the configuration settings from the device configuration template (step 130). If a configuration template does not exist for the selected source device, the user is prompted to select another source device (return to step 122).

User interface 12 copies the configuration settings for the source device to an electronic clipboard 42, to a list of cookies 44 stored in the local files of web browser 38, or to another suitable location (step 132). The configuration engine loads the specification file for the selected source device (step 134) and prompts the user to select one or more destination devices (step 136). Referring to Fig. 6B, the configuration engine 30 loads the specification file for the destination device, compares that specification file with the specification file of the source device, and creates a list of features of the source device that are compatible with the destination network device (step 138). For each compatible feature, the system determines whether the feature is a recommended feature in list 50 (step 140). If the feature is recommended in list 50, configuration engine 30 applies the stored configuration settings for that feature to the destination device (step 142). If it is not a recommended feature, configuration engine 30, through interface translator 30, polls the user as to whether the configuration settings of the non-recommended feature are to be applied to the destination device (step 144).

Once the configuration settings for each compatible feature are applied or rejected as non-recommended, the above process is repeated for the next selected destination device (return to step 138). The steps may be repeated, for example, by the use of two variables, n and r, where n represents the number of selected destination devices (see step 136) and r represents the number of compatible features for each destination device (see step 138). For each selected destination device a counter, X, is established (step 138) to apply the configuration settings for each compatible feature by repeating steps 140, 142 and 144 (steps 146 and 148). A counter, Y, is established (step 136) to return to step 76 and repeat the process for each destination device (steps 148, 150 and 152).

Once the process has been completed for each selected destination device, configuration engine 30 creates a configuration log, provides feedback and advice to the user regarding configuring the non-compatible features of the destination devices, and, through interface translator 28, polls the user as to whether to save the configuration settings of the source device to a device configuration template (step 154). The user may also be polled as to whether the entire configuration process should be repeated by returning to step 122 for a new set of source and destination devices (step 156). If the user is finished, the process terminates (step 158).

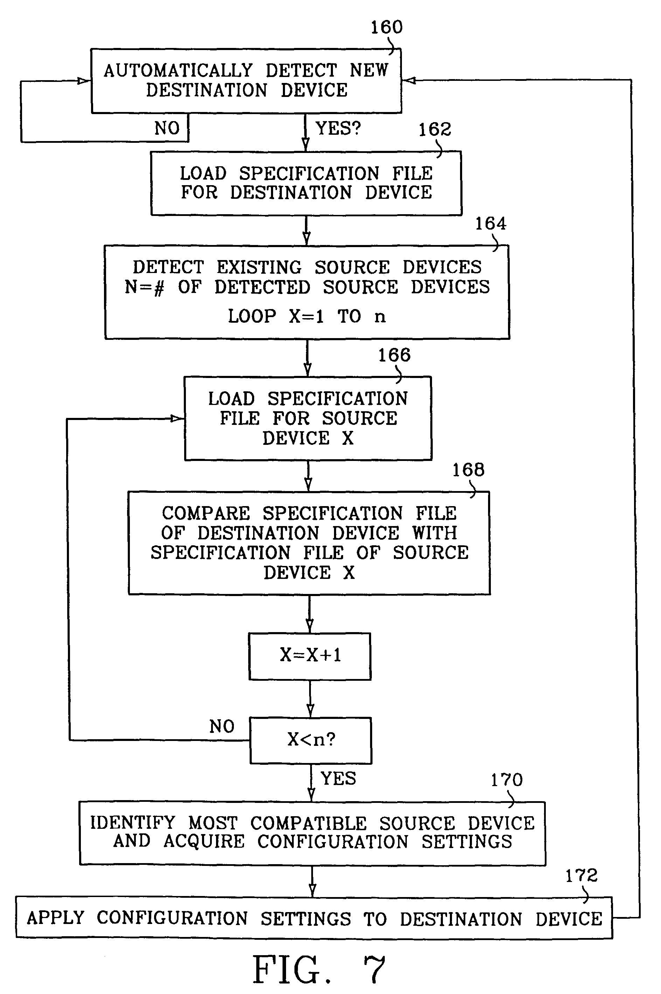

Fig. 7 illustrates another embodiment of the invented configuration method in which the introduction of a new device is automatically detected and configured with or without user intervention. Configuration engine automatically detects when a new device is installed on the network (step 160). That new device is referred to as a destination device. With or without user intervention, upon detection of a destination device, configuration engine 30 loads the specification file for the destination device (step 162). Configuration engine 30 detects other configured devices available on the network and identifies those as potential source devices (step 164). The specification file for each potential source device is loaded and compared to the specification file for the destination device (steps 166 and 168). Configuration engine 30 identifies the most compatible potential source device as the source device and applies the configuration settings of the source device (for compatible features) to the destination device (steps 170 and 172).

The present invention has been shown and described with reference to the foregoing exemplary embodiments. It is to be understood, however, that other forms, details, and embodiments may be made without departing from the spirit and scope of the invention which is defined in the following claims.

## Claims

1. A method for configuring one or more devices on a computer network, comprising:
selecting a source device (16);
selecting one or more destination devices (18 and 20);
electronically acquiring configuration settings of the source device (16); and
automatically applying configuration settings of the source device (16) to each destination device (18 and 20).

2. The method of Claim 1, wherein the act of acquiring comprises acquiring the configuration settings directly from the source device (16).

3. The method of Claim 1, further comprising copying the acquired settings to an electronic clipboard (42) and the act of applying comprises pasting settings from the electronic clipboard (42) to the destination device (18 and 20).

4. The method of Claim 1, wherein the acts of selecting, acquiring and applying are performed at least in part using a web browser (38).

5. The method of Claim 1, further comprising identifying the configurable features of the source device (16) that are compatible with the configurable features of each destination device (18 and 20) and the act of applying comprises applying the settings of at least some of the compatible features of the source device (16) to the destination device (18 and 20).

6. The method of Claim 4, further comprising saving the acquired settings to a list of cookies (44) maintained by the web browser (38), and the act of applying comprises applying the settings from the list of cookies (44) to the destination device (18 and 20).

7. The method of Claim 5, wherein the act of identifying comprises creating a specification file (48) of configurable features for each device and comparing the specification file (48) of the source device (16) with the specification file (48) of the destination device (18 and 20).

8. The method of Claim 5, further comprising presenting a user with a list of compatible features and allowing the user to select which features to apply to the destination device (18 and 20) and wherein the act of applying comprises applying the settings of only the selected features to the destination device (18 and 20).

9. A method for configuring one or more devices on a computer network, comprising:
creating a specification file (48) of configurable features for each device;
selecting a destination device (18 and 20);
comparing the specification file (48) of the destination device (18 and 20) with the specification file (48) of other devices on the network;
based on the act of comparing, selecting a source device (16) from one of the other devices on the network;
electronically acquiring configuration settings of the source device (16);
automatically applying configuration settings of the source device (16) to the destination device (18 and 20).

10. The method of Claim 9, wherein each of the acts are performed automatically upon the further act of detecting a new device on the network.
